# EUROPÄISCHE PATENTSCHRIFT

(11) **EP 2 181 311 B1**
(45) Veröffentlichungstag und Bekanntmachung des Hinweises auf die Patenterteilung: **02.03.2011**
(21) Anmeldenummer: 08773620.3
(22) Anmeldetag: 25.06.2008
(51) Int. Cl.: G01G 23/10

(54) **VERFAHREN UND VORRICHTUNG ZUR DYNAMISCHEN KONTROLLWÄGUNG**
METHOD AND APPARATUS FOR DYNAMICAL CHECK WEIGHING
PROCÉDÉ ET DISPOSITIF DE PESÉE DYNAMIQUE DE CONTRÔLE

(30) Priorität: 24.08.2007 DE 102007040301
(43) Veröffentlichungstag der Anmeldung: 05.05.2010
(73) Patentinhaber: SARTORIUS AG, 37075 Göttingen (DE)
(72) Erfinder: KLAUER, Alfred, 37083 Göttingen (DE)
(74) Vertreter: Schneider, Peter Christian
(86) Internationale Anmeldenummer: PCT/EP2008/005112
(87) Internationale Veröffentlichungsnummer: WO 2009/026980

(56) Entgegenhaltungen:
- EP-A- 0 429 725
- EP-A- 1 363 112
- WO-A-2004/102135
- US-A- 5 308 930
- US-A- 6 012 031

## Beschreibung

Die Erfindung bezieht sich auf ein Verfahren zur dynamischen Kontrollwägung von Objekten, die mittels einer Fördereinrichtung mit einer einstellbaren Fördergeschwindigkeit über einen gewichtssensitiven Bereich einer Wägeeinrichtung geführt werden, wobei der gewichtssensitive Bereich in regelmäßigen Abständen Einzel-Gewichtsmesswerte liefert, aus denen in einer digitalen Auswerteeinheit durch Mittelwertbildungen Ergebnis-Gewichtswerte abgeleitet werden.

Die Erfindung bezieht sich weiter auf eine Vorrichtung zur dynamischen Kontrollwägung von Objekten, umfassend
- eine Wägeeinrichtung mit einem gewichtssensitiven Bereich,
- eine Fördereinrichtung, welche die Objekte mit einer einstellbaren Fördergeschwindigkeit über den gewichtssensitiven Bereich der Wägeeinrichtung führt,
wobei der gewichtssensitive Bereich in regelmäßigen Abständen Einzel-Gewichtsmesswerte liefert, aus denen eine nachgeschaltete digitale Auswerteeinheit durch Mittelwertbildungen einen Ergebnis-Gewichtswert ableitet.

Derartige Verfahren und Vorrichtungen sind bekannt aus der DE 103 22 504 A1. Diese Druckschrift offenbart eine so genannte Kontrollwaage und ein Verfahren zu deren Einstellung und Betrieb. Unter einer Kontrollwaage versteht man eine Wägeeinrichtung, deren gewichtssensitivem Bereich mittels einer Fördereinrichtung Objekte mehr oder weniger kontinuierlich zugeführt werden, um dort gewogen zu werden. Anschließend werden die gewogenen Objekte von der Fördereinrichtung weiter transportiert und ggf. entsprechend dem Wägeergebnis sortiert. Ein typischer Einsatzbereich solcher Kontrollwaagen ist die Endkontrolle nominell gleichartiger Objekte. Ein Beispiel wäre die abschließende Füllmengenkontrolle von Konservendosen.

Ein grundlegendes Problem solcher Anlagen ist das Finden eines befriedigenden Kompromisses zwischen Wägegenauigkeit einerseits und Wägegeschwindigkeit andererseits. Zudem werden derartige Anlagen typischerweise in industrieller Umgebung mit starken Störeinflüssen betrieben. Ein typischer Aufbau ist etwa die Zuführung der Objekte mittels eines schnell laufenden Förderbandes, welches die Objekte an einen auf dem gewichtssensitiven Bereich der Wägeeinrichtung abgestützten, separaten Förderbandabschnitt übergibt, der die Objekte nach der Wägung an einen weiteren Förderbandabschnitt übergibt. Das Wägesignal wird bei derartigen Anlagen von erheblichen Störeinflüssen durch die Bewegung des Förderbandes, dem eingangs und ausgangs des auf der Wägeeinrichtung abgestützten Förderbandabschnittes nur bereichsweisen Aufliegen des Objektes und anderen Vibrationen der industriellen Umgebung überlagert. Es hat sich daher bewährt, anstelle eines einzelnen Messwertes eine Vielzahl von Einzel-Gewichtsmesswerten für ein Objekt zu erfassen und durch geeignete Mittelwertbildung einen Ergebnis-Gewichtswert abzuleiten. In der oben genannten Druckschrift erfolgt die Mittelwertbildung über einen bestimmten Abschnitt der Folge von Einzel-Gewichtsmesswerten. Im Rahmen einer Voreinstellungsprozedur, bei der eine Vielzahl von Objekten mit variierender Wahl des Abschnittes gewogen werden, wird die optimale Lage und Länge des Mittelungsabschnitts durch "automatisches" Ausprobieren gefunden. Diese Abschnittswahl wird dann für den nachfolgenden Kontrollbetrieb der Anlage beibehalten.

Nachteilig bei dem bekannten Verfahren ist seine mangelnde Flexibilität gegenüber Änderungen der Bandgeschwindigkeit. Variationen der Bandgeschwindigkeit kommen beim praktischen industriellen Betrieb häufig vor. Sie können sowohl auf technisch wie personell bedingten Variationen der Fördergeschwindigkeit bei der Zuführung der Objekte beruhen. Die Fördergeschwindigkeit über dem gewichtssensitiven Bereich der Wägeeinrichtung muss sich zur Aufrechterhaltung des Betriebs exakt an die Fördergeschwindigkeit der Zuführung anpassen. Bei der bekannten Vorrichtung ist es erforderlich, für jede Änderung der Fördergeschwindigkeit eine erneute Voreinstellungsprozedur ablaufen zu lassen, was mit erheblichen Zeit- und damit Kostennachteilen verbunden ist.

Die Druckschrift US 5308930 A offenbart eine Vorrichtung zur Wägung von Objekten auf einem gewichtssensitiven Bereich einer Wägeeinrichtung, welche in regelmäßigen Abständen Einzelgewichtsmesswerte liefert. Diese umfasst eine Fördereinrichtung, welche die Objekte zur Durchführung einer dynamischen Kontrollwägung mit einer einstellbaren Fördergeschwindigkeit über den gewichtssensitiven Bereich der Wägeeinrichtung führt. Weiterhin weist diese eine digitale Auswerteeinheit mit einer Mehrzahl kaskadierter Mittelwertfilter auf, wobei in Abhängigkeit von der Fördergeschwindigkeit die Anzahl der zwischen den Filterstufen übertragenen Mittelwerte variiert wird.

Es ist die Aufgabe der vorliegenden Erfindung eine gattungsgemäße Kontrollwaage und ein gattungsgemäßes Kontrollwägeverfahren derart weiterzubilden, dass eine bessere Anpassbarkeit an variierende Fördergeschwindigkeiten gewährleistet ist.

Diese Aufgabe wird in Verbindung mit den Merkmalen des Oberbegriffs von Anspruch 1 dadurch gelöst, dass die Auswerteeinheit eine Mehrzahl kaskadierter Mittelwertfilter unterschiedlicher Filterlängen aufweist und die Filterlängen in Abhängigkeit von der Fördergeschwindigkeit um einen gemeinsamen Skalierungswert variiert werden.

Die Aufgabe wird weiter in Verbindung mit den Merkmalen des Oberbegriffs von Anspruch 8 dadurch gelöst, dass die Auswerteeinheit eine Mehrzahl kaskadierter Mittelwertfilter unterschiedlicher Filterlängen sowie Filterlängenvariationsmittel aufweist, welche die Filterlängen in Abhängigkeit von der Fördergeschwindigkeit um einen gemeinsamen Skalierungswert variieren.

Besonders vorteilhafte Ausführungsformen der Erfindung sind Gegenstand der abhängigen Ansprüche.

Nachfolgend sollen die Merkmale, Wirkungen und Vorteile des erfindungsgemäßen Verfahrens sowie der erfindungsgemäßen Vorrichtung gemeinsam diskutiert werden.

Die Erfindung beruht auf der Erkenntnis wesentlicher Eigenschaften so genannter Mittelwert-Filterkaskaden. Unter einer Mittelwert-Filterkaskade versteht man eine Abfolge von Mittelwertfiltern, die jeweils eine durch die so genannte Filterlänge vorgegebene Anzahl aufeinanderfolgender Eingabewerte in einen Mittelwert umrechnet und diesen als einen Eingabewert des nachfolgenden Filters ausgibt. Dabei sind im Wesentlichen zwei Varianten günstig: Bei der ersten Variante wird die Folge von Einzel-Messwerten in Unterabschnitte der Filterlänge unterteilt und für jeden Abschnitt ein Mittelwert errechnet und ausgegeben. Dabei wird die Anzahl der in den nächstfolgenden Filter eingegebenen Werte gegenüber der Anzahl der in den vorangehenden Filter eingegebenen Werte um einen der Filterlänge entsprechenden Faktor dezimiert. Bei der zweiten Variante werden die Mittelwerte jeweils in einem durchlaufenden Fenster der Filterlänge berechnet. Dies bedeutet, dass die Anzahl der berechneten Mittelwerte in etwa der Anzahl der in den Filter eingegebenen Einzelwerte entspricht. Durch geeignete Wahl der Filterlängen in der Kaskade können dominante Störfrequenzen sehr zuverlässig ausgefiltert werden. Die spezielle Wahl der Filterlängen ist dabei ein kompliziertes, auf den Einzelfall abzustellendes Unterfangen, dass dem Fachmann jedoch grundsätzlich bekannt ist.

Es wurde als wesentliche Eigenschaft einer solchen Filterkaskade erkannt, dass die grundlegende Form der Impulsantwort, d.h. der Übertragungsfunktion der Filterkaskade im Wesentlichen nur von dem Verhältnis der Filterlängen der einzelnen Filter zueinander abhängig ist. Eine Variation der Filterlängen ohne Veränderung ihrer relativen Verhältnisse zueinander kann die Lage und Breite der Übertragungsfunktion auf der Frequenzachse, nicht jedoch ihre grundlegende Form verändern. Diese besondere Eigenschaft macht sich die vorliegende Erfindung zu nutze.

Die Erfindung geht davon aus, dass sich mit einer Änderung der Fördergeschwindigkeit die hauptsächlichen, durch die Förderbewegung eingebrachten Störfrequenzen entsprechend verändern. Wird die Fördergeschwindigkeit beispielsweise gesteigert, verschieben sich die Störfrequenzen hin zu höheren Frequenzen. Umgekehrtes gilt für eine Verringerung der Fördergeschwindigkeit. Die Erfindung schlägt nun vor, anstelle einer völligen Neueinrichtung der Filterkaskade bei einer Änderung der Fördergeschwindigkeit die Filterlängen der Kaskade anzupassen, ohne ihr relatives Verhältnis zueinander zu verändern. Mit anderen Worten werden die Filterlängen der Kaskade mit einem gemeinsamen Skalierungswert skaliert.
Insbesondere hat sich eine umgekehrt proportionale Abhängigkeit des Skalierungswertes von der Fördergeschwindigkeit als geeignete Form der Abhängigkeit erwiesen.

Ein wesentlicher Vorteil dieses Verfahrens ist die schnelle und flexible Anpassung an Fördergeschwindigkeitsvariationen, selbst wenn diese nur kurzfristig auftreten sollten.

Diese flexible Anpassbarkeit erlaubt eine Automatisierung der Geschwindigkeitsanpassung. Hierzu wird die Fördergeschwindigkeit in regelmäßigen Abständen von einem Geschwindigkeitssensor gemessen und ein gemessener Geschwindigkeitswert wird an die Auswerteeinheit zur entsprechenden Einstellung des Skalierungswertes übermittelt. Geschwindigkeitssensoren, die zu diesem Zwecke von der Kontrollwaage umfasst sein können, sind dem Fachmann ebenso bekannt, wie die erforderlichen Techniken zur entsprechenden Einrichtung der Auswerteeinheit, die beispielsweise durch automatisierte Programmierung digitaler Filter in einer Datenverarbeitungsanlage erfolgen kann.

Ein wichtiger Schritt zur Vorbereitung des erfindungsgemäßen Verfahrensablaufs ist die anfängliche Wahl der Filterlängen für eine gegebene Normal-Fördergeschwindigkeit. Diese wird in der Regel empirisch vorzunehmen sein, da die jeweils auszufilternden Störfrequenzen stark von der individuellen Umgebung, der Normal-Fördergeschwindigkeit, den Objektgrößen und -gewichten etc. abhängt. Zur Vereinfachung dieses empirischen Einrichtungsverfahrens wird vorgeschlagen, dass zur Wahl der anfänglichen Einstellung der Filterlängen die Einzel-Gewichtsmesswerte eines repräsentativen Objektes in einem Ringpuffer gespeichert werden und die Mittelwertbildungen von der Auswerteeinheit wiederholt und mit iterativ variierenden Filterlängen auf den gespeicherten Werten solange durchgeführt werden, bis der resultierende Ergebnis-Gewichtswert mit einem tatsächlichen Gewichtswert des Objektes übereinstimmt. Mit anderen Worten bedeutet dies, dass das Wiegen einer Vielzahl von Objekten mit unterschiedlichen Filtereinstellungen virtuell durchgeführt wird, indem die Neuaufnahme von Einzel-Gewichtswerten vieler Objekte durch die häufige Wiederholung der im Ringpuffer gespeicherten Einzel-Gewichtsmesswerte eines einzelnen Objektes simuliert wird. Diese Simulation mit variierenden Filtereinstellungen wird solange wiederholt, bis der resultierende Ergebnis-Gewichtswert mit dem (bekannten) tatsächlichen Gewicht des Objektes übereinstimmt. Der Begriff der "Übereinstimmung" ist hier selbstverständlich als "Übereinstimmung innerhalb vorgegebener Toleranzregeln" zu verstehen, wobei die Toleranzregeln den jeweiligen Anforderungen des Einzelfalls anzupassen sind.

In vielen Fällen kann es ausreichend sein, ausgehend von einer bereits erprobten oder standardmäßig vorgegebenen Filterlängen-Konstellation während der iterativen Variation der Filterlängen im Rahmen des Einstellungsprozesses deren Verhältnis untereinander konstant zu lassen. Mit anderen Worten bedeutet dies, dass sich in solchen Fällen die Einstellprozedur auf das Auffinden des Anfangs-Skalierungswertes, insbesondere Eins, beschränkt, von dem aus dann die fördergeschwindigkeitsabhängigen Variationen während des Betriebes abgeleitet werden.

Bei einer Weiterbildung des erfindungsgemäßen Verfahrens ist vorgesehen, das gleiche grundlegende Prinzip auch für die Anpassung der Filterkonstellation an unterschiedliche Objektgrößen, insbesondere deren Ausdehnung in Förderrichtung, anzuwenden. Dies wird dadurch erreicht, dass die Filterlängen in Abhängigkeit von der Längsausdehnung der Objekte in Förderrichtung um einen gemeinsamen Skalierungswert variiert werden. Dabei ist es zur Automatisierung günstig, wenn die Längsausdehnung eines Objektes in Förderrichtung von einem Längensensor erfasst und an die Auswerteeinheit zur entsprechenden Einstellung des Skalierungswertes übermittelt wird. Dies erlaubt den Einsatz einer erfindungsgemäßen Kontrollwaage nicht nur für reine Kontrollaufgaben bezogen auf nominell gleichartige Objekte, sondern auch für die gewichtsabhängige Sortierung von Objekten unterschiedlicher Größe.

Weitere Merkmale und Vorteile der Erfindung ergeben sich aus der nachfolgenden, speziellen Beschreibung sowie den Zeichnungen.

Es zeigen:
- Figur 1:: eine schematische Darstellung einer Kontrollwaage.
- Figur 2:: eine schematische Darstellung des erfindungsgemäßen Skalierungsprinzips.
- Figur 3:: eine schematische Darstellung einer bevorzugten Filtereinstellungsprozedur.

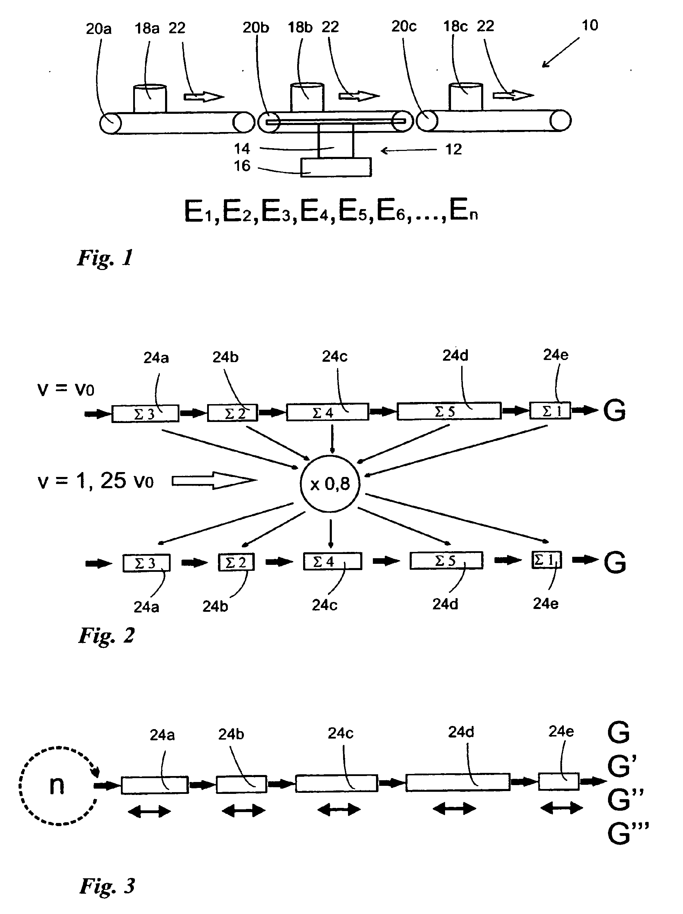

Figur 1 zeigt eine schematische Darstellung einer Kontrollwaage 10. Die Kontrollwaage 10 umfasst eine Wägeeinrichtung 12 mit einem gewichtssensitiven Bereich 14 und einer angeschlossenen Auswerteeinheit 16. Die Auswerteeinheit 16 kann insbesondere auf Basis eines Mikroprozessors aufgebaut sein. Typischerweise umfasst eine derartige Kontrollwaage auch eine Anzeige- und Bedieneinheit, die in Fig. 1 jedoch nicht dargestellt ist.

Objekte 18a-c, an denen Kontrollwägungen durchgeführt werden sollen, werden der Wägeeinrichtung 12 über ein Förderband 20, umfassend mehrere Abschnitte 20a-20c zugeführt und abgeführt. Der in Figur 1 mittlere Förderbandabschnitt 20b ist auf dem gewichtssensitiven Bereich 14 der Wägeeinrichtung 16 abgestützt. Hieraus folgt, dass ein Objekt (18b in Figur 1), welches sich im Förderbandabschnitt 20b befindet, von der Wägeeinrichtung 12 gewogen werden kann. Wie durch die Bewegungspfeile 22 angedeutet, bewegt sich das Objekt 18b während der Wägung mit der Fördergeschwindigkeit in Förderrichtung. Während des Zeitraums, in dem sich das Objekt 18b auf dem Förderbandabschnitt 20b befindet, liefert der gewichtsensitive Bereich 14 der Wägeeinrichtung 12, der insbesondere einen A/D-Wandler enthalten kann, in regelmäßigen Abständen, d.h. insbesondere mit der Wandlerfrequenz, eine Folge von n Einzel-Gewichtsmesswerten E1, E2, ... En. Diese Folge von Einzel-Gewichtsmesswerten repräsentiert ein zeitlich schwankendes Messsignal, in dem der von dem Gewicht des Objektes 18b bedingte Messwert von Signalen überlagert ist, die den vorgenannten Störgrößen zuzuschreiben sind.

Um das Signal von diesen Störsignalen zu reinigen, wird es, wie im oberen Teil von Figur 2 schematisch dargestellt, durch eine Kaskade von Mittelwertfiltern geschickt. Die Filterkaskade enthält bei der dargestellten Ausführungsform eine Folge von fünf hintereinander geschalteten Mittelwertbildnern unterschiedlicher Filterlänge. Jeder Mittelwertbildner umfasst ein Schieberegister, das eine der Filterlänge entsprechende Anzahl von Eingangswerten zu speichern vermag. Sobald das Register gefüllt ist, wird aus den gespeicherten Einzelwerten ein Mittelwert erzeugt und als ein erster Ausgabewert ausgegeben. Jeder neue Eingangswert in das Schieberegister verdrängt den jeweils ältesten Speicherwert und stößt die Berechnung eines neuen Mittelwertes der aktuell im Speicher enthaltenen Einzelwerte an und gibt diesen als nächsten Ausgabewert aus. Die resultierende Folge von Ausgabe-Mittelwerten des ersten Mittelwertbildners wird in den zweiten Mittelwertbildner eingelesen, der nach demselben Prinzip arbeitet, aber eine andere Filterlänge aufweisen kann. Auf diese Weise durchlaufen die Werte die gesamte Filterkaskade, sodass an deren Ende eine mit G bezeichnete, gefilterte Folge von Ergebnis-Gewichtswerten entsteht. Alternativ hierzu ist es auch möglich, die Filterkaskade so einzurichten, dass ein einzelner Ergebnis-Gewichtswert resultiert. Dies kann beispielsweise erreicht werden, indem eine den letzten Filter verlassende Wertefolge geeignet zusammengefasst, z.B. gemittelt wird, indem ein einzelner Wert aus der Ausgabefolge des letzten Filters ausgewählt wird oder indem die Filterkaskade nicht nach dem oben beschriebenen Prinzip des "rollenden Fensters" sondern chargenweise arbeitet, was die Anzahl der weitergegebenen Werte in jeder Filterstufe reduziert.

Die einzelnen Filterstufen, die in Figur 2 mit den Bezugszeichen 24a-e bezeichnet sind, sind schematisch als Blöcke unterschiedlicher Länge dargestellt, was ihre unterschiedlichen Filterlängen symbolisieren soll. Insbesondere ist im Beispiel von Figur 2 angenommen, dass die Filterlängen der einzelnen Filterstufen 24a-e zueinander in einem Verhältnis von 3:2:4:5:1 stehen, was in Figur 2 durch die Symbole Σ3, Σ2, Σ4, Σ5, Σ1 angedeutet ist. In absoluten Zahlen ausgedrückt können z.B. Filterlängenabstufungen von 12:8:16:20:4 jeweils zu mittelnden Werten in der Praxis eine günstige Wahl darstellen. Typischerweise verfolgt man das Ziel einer möglichst gleichmäßigen Verteilung der Nullstellen im Frequenzgang.

Die konkrete Weiterverwendung des bzw. der Ergebnis-Gewichtswerte G ist den Anforderungen des Einzelfalls anzupassen. Beispielsweise kann ein Sollgewicht des Objektes 18b als erreicht gelten, wenn ein vorgegebener Gewichtsschwellenwert von einer Folge von Ergebnis-Gewichtswerten G eine bestimmte Anzahl von Malen über- und unterschritten wird. In Fällen, in denen ein einzelner Ergebnis-Gewichtswert G berechnet wird, kann dieser mit einem oder mehreren vorgegebenen Gewichtsschwellenwerten verglichen werden und eine nachfolgende, in den Figuren nicht dargestellte Sortieranlage entsprechend schalten. Die spezielle Verwendung des oder der Ergebnis-Gewichtswerte G ist nicht Gegenstand der vorliegenden Erfindung.

Im unteren Teil von Figur 2 ist schematisch ein Anpassungsmechanismus an Änderungen der Fördergeschwindigkeit dargestellt. Im gezeigten Beispiel sei angenommen, dass sich die Fördergeschwindigkeit v von einer Anfangsfördergeschwindigkeit v0 um einen Faktor 1,25 auf v=1,25*v0 beschleunigt. Diese Geschwindigkeitsänderung wird vorzugsweise von in den Figuren nicht dargestellten Geschwindigkeitssensoren erfasst und an die Auswerteeinheit 16 übermittelt. Diese verändert daraufhin die Filterlängen der Filterstufen 24a-e. Die Änderung erfolgt für alle Filterstufen 24a-e im gleichen Maße, d.h. mit derselben vorzugsweise linearen Abhängigkeit, wobei jedoch auch nichtlineare Abhängigkeiten realisiert sein können. Im gezeigten Beispiel von Figur 2 ist eine besonders vorteilhafte Abhängigkeit des Skalierungswertes von dem Beschleunigungsfaktor der Fördergeschwindigkeit, nämlich eine umgekehrt proportionale Abhängigkeit realisiert. Im Ergebnis werden, wie im untersten Bereich von Figur 2 dargestellt, die Filterlängen der einzelnen Filterstufen 24a-e jeweils absolut verkürzt, wobei jedoch ihr relatives Verhältnis zueinander erhalten bleibt. Dies bedeutet, dass die Filterlängen zueinander nach wie vor im Verhältnis 3:2:4:5:1 stehen, was bei identischen Objekten 18a-c im Wesentlichen zu demselben Wägeergebnis, symbolisiert durch den Ergebnis-Gewichtswert G, führt. Dies ist die Folge der Tatsache, dass eine lineare Skalierung der Filterlängen einer Kaskade die grundlegende Form der Übertragungsfunktion der Filterkaskade nicht wesentlich verändert, sondern lediglich ihre Lage und Breite beeinflusst.

Figur 3 stellt schematisch ein bevorzugtes Verfahren zum Einstellen einer Anfangskonstellation von Filterlängen der Kaskade dar. Hierzu werden zunächst die Einzel-Gewichtsmesswerte E1, E2,... En eines Objektes 18b in der oben beschriebenen Weise erzeugt und in einen Ringpuffer mit n Speicherplätzen gespeichert. Alsdann wird die gespeicherte Wertefolge wiederholt in die Filterkaskade eingespeist, wobei bei jedem Wiederholungsschritt die Filterlängen der einzelnen Filterstufen 24a-e variiert werden, was zu unterschiedlichen Ergebnis-Gewichtswerten bzw. Wertefolgen G, G', G", G"'... führt. Mit anderen Worten wird die tatsächliche Wägung von mehreren Objekten 18a, 18b, 18c,... ersetzt durch die wiederholte Filterung der einmal gemessenen Wertefolge für das Objekt 18b. Sobald der oder die Ergebnis-Gewichtswerte die für das (bekannte) Objekt 18b erwarteten und gewünschten Eigenschaften aufweisen, kann der Einstellungsprozess abgeschlossen und die gefundene Filterkonstellation für den nachfolgenden Betrieb in der oben erläuterten Weise übernommen werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere kann die Anzahl und Ausgestaltung der Filterstufen der Kaskade auf den Einzelfall angepasst werden. Auch ist es möglich, Kaskaden mit unterschiedlichen Abschnitten zu verwenden, von denen nur ein oder wenige Abschnitte dem oben erläuterten Variationsprinzip folgen und ein oder mehrere andere Abschnitte unabhängig von der Fördergeschwindigkeit oder der Objektgröße konstant bleiben. Letzteres ist insbesondere sinnvoll, wenn bekannt ist, dass Geschwindigkeits- bzw. größenunabhängige Störeinflüsse die Messung überlagern.

## Patentansprüche

1. Verfahren zur Wägung von Objekten (18a-c) auf einem gewichtssensitiven Bereich (14) einer Wägeeinrichtung (12), welcher in regelmäßigen Abständen Einzel-Gewichtsmesswerte (E₁,...,Eₙ) liefert, aus denen in einer digitalen Auswerteeinheit (16), die eine Mehrzahl kaskadierter Mittelwertfilter (24a-e) aufweist, durch Mittelwertbildungen Ergebnis-Gewichtswerte abgeleitet werden, wobei
die Wägung eine dynamische Kontrollwägung ist, bei der die Objekte mittels einer Fördereinrichtung (20a-c) mit einer einstellbaren Fördergeschwindigkeit über den gewichtssensitiven Bereich (14) geführt werden,
**dadurch gekennzeichnet,**
**dass** die kaskadierten Mittelwertfilter (24a-e) unterschiedliche variierbare Filterlängen aufweisen und die Filterlängen der kaskadierten Mittelwertfilter (24a-e) in Abhängigkeit von der Fördergeschwindigkeit um einen gemeinsamen Skalierungswert variiert werden.

2. Verfahren nach Anspruch 1,
**dadurch gekennzeichnet,**
**dass** der Skalierungswert in umgekehrt proportionaler Weise von der Fördergeschwindigkeit abhängt.

3. Verfahren nach einem der vorangehenden Ansprüche,
**dadurch gekennzeichnet,**
**dass** die Fördergeschwindigkeit in regelmäßigen Abständen von einem Geschwindigkeitssensor gemessen und ein gemessener Fördergeschwindigkeitswert an die Auswerteeinheit (16) zur entsprechenden Einstellung des Skalierungswertes übermittelt wird.

4. Verfahren nach einem der vorangehenden Ansprüche,
**dadurch gekennzeichnet,**
**dass** zur Wahl einer anfänglichen Einstellung der Filterlängen die Einzel-Gewichtsmesswerte (E₁,...,Eₙ) eines repräsentativen Objektes (186) in einem Ringpuffer gespeichert werden und die Mittelwertbildungen von der Auswerteeinheit (16) wiederholt und mit iterativ variierenden Filterlängen auf den gespeicherten Werten solange durchgeführt werden, bis die resultierenden Ergebnis-Gewichtswerte (G, G', G", G''') mit einem tatsächlichen Gewicht des Objektes (186) übereinstimmen.

5. Verfahren nach Anspruch 4,
**dadurch gekennzeichnet,**
**dass** während der iterativen Variation der Filterlängen deren Verhältnis untereinander konstant bleibt.

6. Verfahren nach einem der vorangehenden Ansprüche,
**dadurch gekennzeichnet,**
**dass** die Filterlängen in Abhängigkeit von der Längsausdehnung der Objekte (18a-c) in Förderrichtung um einen gemeinsamen Skalierungswert variiert werden.

7. Verfahren nach Anspruch 6,
**dadurch gekennzeichnet,**
**dass** die Längsausdehnung eines Objektes (18a-c) in Förderrichtung von einem Längensensor erfasst und an die Auswerteeinheit (16) zur entsprechenden Einstellung des Skalierungswertes übermittelt wird.

8. Vorrichtung zur Wägung von Objekten (18a-c) auf einem gewichtssensitiven Bereich (14) einer umfassten Wägeeinrichtung, welche in regelmäßigen Abständen Einzel-Gewichtsmesswerte (E₁,...,Eₙ) liefert, aus denen eine digitale Auswerteeinheit (16), die eine Mehrzahl kaskadierter Mittelwertfilter (24a-e) aufweist, durch Mittelwertbildungen Ergebnis-Gewichtswerte (G) ableitet, wobei
eine Fördereinrichtung (20a-c) umfasst ist, welche die Objekte (18a-c) zur Durchführung einer dynamischen Kontrollwägung mit einer einstellbaren Fördergeschwindigkeit über den gewichtssensitiven Bereich (14) der Wägeeinrichtung (12) führt,
**dadurch gekennzeichnet,**
**dass** die kaskadierten Mittelwertfilter (24a-e) unterschiedliche, variierbare Filterlängen aufweisen, sowie die digitale Auswerteeinheit (16) Filterlängenvariationsmittel zum Variieren der Filterlänge aufweist und dass die Filterlängenvariationsmittel die Filterlängen der kaskadierten Mittelwertfilter (24a-e) in Abhängigkeit von der Fördergeschwindigkeit um einen gemeinsamen Skalierungswert variieren.

9. Vorrichtung nach Anspruch 8,
**dadurch gekennzeichnet,**
**dass** der Skalierungswert in umgekehrt proportionaler Weise von der Fördergeschwindigkeit abhängt.

10. Vorrichtung nach einem der Ansprüche 8 bis 9,
**dadurch gekennzeichnet,**
**dass** ein Geschwindigkeitssensor zur regelmäßigen Erfassung eines Fördergeschwindigkeitswertes und dessen Übermittlung an die Auswerteeinheit (16) umfasst ist, wobei die Auswerteeinheit (16) eingerichtet ist, jeweils nach der Übermittlung eines aktualisierten Fördergeschwindigkeitswertes den Skalierungswert entsprechend zu verändern.

11. Vorrichtung nach einem der Ansprüche 8 bis 10,
**dadurch gekennzeichnet,**
**dass** die Auswerteeinheit (16) einen Ringpuffer umfasst, in dem die Einzel-Gewichtsmesswerte (E₁,...,Eₙ) eines repräsentativen Objektes (186) speicherbar sind, und die Auswerteeinheit (16) weiter eingerichtet ist, zur Wahl einer anfänglichen Einstellung der Filterlängen die Mittelwertbildungen auf den gespeicherten Werten solange mit iterativ variierenden Filterlängen zu wiederholen, bis die resultierenden Ergebnis-Gewichtswerte (G, G', G", G"') mit einem tatsächlichen Gewicht des Objektes übereinstimmen.

12. Vorrichtung nach Anspruch 11,
**dadurch gekennzeichnet,**
**dass** die iterative Variation der Filterlängen deren Verhältnis untereinander konstant lässt.

13. Vorrichtung nach einem der Ansprüche 8 bis 12,
**dadurch gekennzeichnet,**
**dass** die Filterlängenvariationsmittel die Filterlängen in Abhängigkeit von einer Längsausdehnung der Objekte (18a-c) in Förderrichtung um einen gemeinsamen Skalierungswert variieren.

14. Vorrichtung nach Anspruch 13,
**dadurch gekennzeichnet,**
**dass** ein Längensensor zur Erfassung eines Längsausdehnungswertes eines Objektes (18a-c) und dessen Übermittlung an die Auswerteeinheit (16) umfasst ist, wobei die Auswerteeinheit (16) eingerichtet ist, jeweils nach der Übermittlung eines aktualisierten Längsausdehnungswertes den Skalierungswert entsprechend zu verändern.

## Claims

1. A method for weighing objects (18a-c) on a weight-sensitive zone (14) of a weighing device (12) that at regular intervals supplies individual weight measurements (E₁,..., Eₙ) from which resulting weight values are derived by calculating mean values in a digital evaluation unit (16) having a plurality of cascaded mean value filters (24a-e), wherein the weighing is a dynamic check weighing in which the objects are conveyed over the weight-sensitive zone (14) by means of a conveying device (20a-c) at an adjustable conveying speed,
**characterized in that**
the cascaded mean value filters (24a-e) have different, variable filter lengths, and the filter lengths of the cascaded mean value filters (24a-e) are varied by a common scaling value as a function of the conveying speed.

2. A method according to Claim 1,
**characterized in that**
the scaling value depends in inverse proportion on the conveying speed.

3. A method according to any of the preceding claims,
**characterized in that**
the conveying speed is measured at regular intervals by a speed sensor and a measured conveying speed value is transmitted to the evaluation unit (16) for the purpose of appropriately setting the scaling value.

4. A method according to any of the preceding claims,
**characterized in that**
in order to select an initial setting of the filter lengths, the individual weight measurements (E₁, ...Eₙ) of a representative object (18b) are stored in a ring buffer and the calculations of the mean values are carried out on the stored values by the evaluation unit (16) repeatedly and with iteratively varying filter lengths until the resulting weight values (G, G', G", G''') correspond to an actual weight of the object (18b).

5. A method according to Claim 4,
**characterized in that**
during the iterative variation of the filter lengths their ratio to each other remains constant.

6. A method according to any of the preceding claims
**characterized in that**
the filter lengths are varied by a common scaling value as a function of the length of the objects (18a-c) in the conveying direction.

7. A method according to Claim 6
**characterized in that**
the length of an object (18a-c) in the conveying direction is detected by a length sensor and transmitted to the evaluation unit (16) in order for the scaling value to be appropriately set.

8. An apparatus for weighing objects (18a-c) on a weight-sensitive zone (14) of a weighing device comprised therein that at regular intervals provides individual weight measurements (E₁, ..., Eₙ) from which a digital evaluation unit (16) having a plurality of cascaded mean value filters (24a-e) derives resulting weight values (G) by performing mean value calculations, wherein
a conveying device (20a-c) is comprised that conveys the objects (18a-c) over the weight-sensitive zone (14) of the weighing device (12) at an adjustable conveying speed in order to carry out a dynamic check weighing,
**characterized in that**
the cascaded mean value filters (24a-e) have different, variable filter lengths, and the digital evaluation unit (16) has filter length varying means for varying the filter length, and further **characterized in that** the filter length varying means vary the filter lengths of the cascaded mean value filters (24a-e) by a common scaling value as a function of the conveying speed.

9. An apparatus according to Claim 8,
**characterized in that**
the scaling value depends in inverse proportion on the conveying speed.

10. An apparatus according to either of Claims 8 to 9,
**characterized in that**
it comprises a speed sensor for regularly detecting a conveying speed value and transmitting it to the evaluation unit (16), wherein the evaluation unit (16) is configured to appropriately modify the scaling value each time after an updated conveying speed value has been transmitted.

11. An apparatus according to any of Claims 8 to 10,
**characterized in that**
the evaluation unit (16) comprises a ring buffer in which the individual weight measurements (E₁, ..., Eₙ) of a representative object (18b) can be stored and that, for the purpose of selecting an initial setting of the filter lengths, the evaluation unit (16) is further configured to repeat the mean value calculations on the stored values, using iteratively varying filter lengths, until the resulting weight values (G, G', G", G''') correspond to an actual weight of the object.

12. An apparatus according to Claim 11,
**characterized in that**
the iterative variation of the filter lengths leaves their ratio to one another constant.

13. An apparatus according to any of Claims 8 to 12,
**characterized in that**
the filter length varying means vary the filter lengths by a common scaling value as a function of a length of the objects (18a-c) in the conveying direction.

14. An apparatus according to Claim 13
**characterized in that**
it comprises a length sensor to detect a length value of an object (18a-c) and to transmit it to the evaluation unit (16), wherein the evaluation unit (16) is configured to appropriately modify the scaling value each time after an updated length value has been transmitted.

## Revendications

1. Procédé de pesée d'objets (18a-c) sur une zone sensible au poids (14) d'un dispositif de pesée (12) qui fournit à intervalles réguliers des mesures de poids individuelles (E₁,..., Eₙ) à partir desquelles des valeurs de poids résultantes sont dérivées par calcul des valeurs moyennes dans une unité d'évaluation numérique (16) ayant une pluralité de filtres de valeurs moyennes en cascade (24a-e), la pesée étant une pesée dynamique de contrôle lors de laquelle les objets sont acheminés sur la zone sensible au poids (14) au moyen d'un dispositif de transport (20a-c) à une vitesse de transport réglable,
**caractérisé en ce que**
les filtres de valeurs moyennes en cascade (24a-e) ont des longueurs différentes et variables, lesdites longueurs de filtre pouvant être variées par une valeur d'échelle commune en fonction de la vitesse de transport.

2. Procédé selon la revendication 1,
**caractérisé en ce que**
la valeur d'échelle dépend en proportion inverse de la vitesse de transport.

3. Procédé selon l'une quelconque des revendications précédentes,
**caractérisé en ce que**
la vitesse de transport est mesurée à intervalles réguliers par un capteur de vitesse et une valeur de vitesse de transport mesurée est transmise à l'unité d'évaluation (16) en vue du réglage adéquat de la valeur d'échelle.

4. Procédé selon l'une quelconque des revendications précédentes,
**caractérisé en ce que**
pour sélectionner un réglage initial des longueurs de filtre, les mesures de poids individuelles (E₁, ...Eₙ) d'un objet représentatif (18b) sont mémorisées dans un tampon circulaire et les calculs des valeurs moyennes sont effectués sur les valeurs stockées par l'unité d'évaluation (16) à plusieurs reprises et avec des longueurs de filtre variées en continuité jusqu'à ce que les valeurs de pesée résultantes (G, G', G", G''') correspondent à un poids réel de l'objet (18b).

5. Procédé selon la revendication 4,
**caractérisé en ce que**
pendant la variation répétée des longueurs de filtre, le rapport entre elles demeure constant.

6. Procédé selon l'une quelconque des revendications précédentes,
**caractérisé en ce que**
les longueurs de filtre sont variées d'une valeur d'échelle commune en fonction de la longueur des objets (18a-c) dans la direction de transport.

7. Procédé selon la revendication 6
**caractérisé en ce que**
la longueur d'un objet (18a-c) dans la direction de transport est détectée par un capteur de longueur et transmise à une unité d'évaluation (16) pour le réglage adéquat de la valeur d'échelle.

8. Installation pour peser des objets (18a-c) sur une zone sensible au poids (14) d'un dispositif de pesée qui fournit à intervalles réguliers des mesures de poids individuelles (E₁,..., Eₙ) à partir desquels une unité d'évaluation numérique (16) ayant une pluralité de filtres de valeurs moyennes en cascade (24a-e) dérive des valeurs de poids résultantes (G) en calculant des valeurs moyennes,
un dispositif de transport (20a-c) intégré acheminant les objets (18a-c) sur une zone sensible au poids (14) du dispositif de pesée (12) à une vitesse de transport réglable pour effectuer une pesée dynamique de contrôle,
**caractérisée en ce que**
les filtres de valeurs moyennes en cascade (24a-e) ont des longueurs différentes et variables, et l'unité d'évaluation numérique (16) comporte des moyens de variation de longueur de filtre pour varier la longueur de filtre, et **caractérisée en outre en ce que** lesdits moyens varient les longueurs des filtres des valeurs moyennes en cascade (24a-e) par une valeur d'échelle commune en fonction de la vitesse de transport.

9. Installation selon la revendication 8,
**caractérisée en ce que**
la valeur d'échelle dépend en proportion inverse de la vitesse de transport.

10. Installation selon l'une des revendications 8 à 9,
**caractérisée en ce qu'**elle
comprend un capteur de vitesse pour saisir régulièrement une valeur de vitesse de transport et la transmettre à une unité d'évaluation (16), ladite unité d'évaluation (16) étant configurée pour modifier convenablement la valeur d'échelle chaque fois après la transmission d'une valeur de vitesse de transport actualisée.

11. Installation selon l'une quelconque des revendications 8 à 10,
**caractérisée en ce que**
l'unité d'évaluation (16) comprend un tampon circulaire dans lequel les mesures de poids individuelles (E₁, ..., Eₙ) d'un objet représentatif (18b) peuvent être mémorisées et, pour sélectionner un réglage initial des longueurs de filtre, l'unité d'évaluation (16) est en plus configurée pour répéter les calculs des valeurs moyennes sur les valeurs mémorisées, en utilisant les longueurs de filtre variés en continuité en continuité jusqu'à ce que les valeurs de pesée résultantes (G, G', G", G''') correspondent à un poids réel de l'objet (16).

12. Installation selon la revendication 11,
**caractérisée en ce que**
pendant la variation répétée des longueurs de filtre, le rapport entre elles demeure constant.

13. Installation selon l'une quelconque des revendications 8 à 12,
**caractérisée en ce que**
les moyens de variation de longueur de filtre varient les longueurs de filtre par une valeur d'échelle commune en fonction d'une longueur des objets (18a-c) dans la direction de transport.

14. Installation selon la revendication 13,
**caractérisée en ce qu'**elle
comprend un capteur de vitesse pour saisir une valeur de longueur d'un objet (18a-c) et la transmettre à une unité d'évaluation (16), ladite unité d'évaluation (16) étant configurée pour modifier la valeur d'échelle après chaque transmission d'une valeur de vitesse de transport actualisée.
